# EUROPEAN PATENT SPECIFICATION

(11) **EP 2 336 949 B1**
(45) Date of publication and mention of the grant of the patent: **16.05.2018**
(21) Application number: 10194077.3
(22) Date of filing: 08.12.2010
(51) Int. Cl.: G06K 9/62, G06K 9/00

(54) **Apparatus and method for registering plurality of facial images for face recognition**
Vorrichtung und Verfahren zur Registrierung mehrerer Gesichtsbilder zur Gesichtserkennung
Appareil et procédé d'enregistrement de la pluralité d'images faciales pour la reconnaissance faciale

(30) Priority: 15.12.2009 KR 20090124416
(43) Date of publication of application: 22.06.2011
(73) Proprietor: Samsung Electronics Co., Ltd., Suwon-si, Gyeonggi-do, 443-742 (KR)
(72) Inventor: Hwang, Yoon-Choon, 442-742, Gyeonggi-do (KR); Cho, Sung-Dae, 442-742, Gyeonggi-do (KR); Son, Byung-Jun, 442-742, Gyeonggi-do (KR); Hong, Tae-Hwa, 442-742, Gyeonggi-do (KR); Kim, Chung-Hoon, 442-742, Gyeonggi-do (KR); Singhal, Nitin, 442-742, Gyeonggi-do (KR)
(74) Representative: Grünecker Patent- und Rechtsanwälte PartG mbB

(56) References cited:
- US-A1- 2003 202 685
- US-A1- 2008 137 918
- US-A1- 2008 212 846
- Weng et al.: "Face Recognition, PASSAGE" In: Jain A K et al. (Eds.): "Biometrics - Personal Identification in Networked Society", 1999, Norwell, US, XP002618476, ISBN: 0-7923-8345-1 pages 76-77, * page 77, line 6 - line 16; figure 3.6 *
- Ross et al.: "Handbook of Multibiometrics", 2006, Springer Science+Business Media, LLC, New York, US, XP002618477, ISBN: 978-0-387-22296-7 pages 44-51, * page 48, line 23 - page 49, line 2 *
- Jia et al.: "Face Sample Quality" In: Li S (Ed.): "Encyclopedia of Biometrics", 27 August 2009 (2009-08-27), Springer Science+Business Media, LLC, New York, US, XP002618478, ISBN: 978-0-387-73002-8 vol. 1, pages 373-376, * the whole document *

## Description

### BACKGROUND OF THE INVENTION

### 1. Field of the Invention

The present invention relates generally to an apparatus and method for registering a plurality of facial images for face recognition, and more particularly, to a facial image registration apparatus and method for registering a plurality of facial images at a time.

### 2. Description of the Related Art

Recent implementations in face recognition technology include a real-time preview face recognition function in cameras of portable terminals, snap cameras, and Digital Single-Lens Reflex cameras (DSLRs), as well as the use of a plurality of frames and information thereof to perform a real-time preview face recognition process.

Individual identification or user authentication and identification technology for personal-information protection have become more and more important. For example, pictures or cards, such as an identification card or a driver's license, are used as identification means.

However, carrying those identification means at all times is inconvenient to users. As a result, much research has been conducted on biometric recognition technologies using human body characteristics for personal-information protection and identification with computers. These technologies include fingerprint recognition or iris recognition.

Unlike recognition technologies that requiring a user's special gesture or action, the face recognition technology is less forced and can identify a user in a contactless manner.

The face recognition technology, which is also a core technology of multimedia data base search, has been widely used in various application fields, such as summarization of an image, identification, image search, security, surveillance systems, and the like.

As such, conventional face recognition recognizes a user's face by using facial characteristics of the user.

However, a result of face recognition is sensitive and changes according to a change in an internal environment, such as identity, a race, a facial expression, an accessory, or the like, and a change in an external environment such as a pose, an external lighting, an image process, or the like.

The performance of face recognition improves as more characteristics or images of an individual are used for face recognition. Consequently, in a terminal used in an embedded condition such as a mobile device, storing many facial characteristics puts much computational load on an algorithm for performing face recognition.

Document US 2008/0137918 A1 relates to an image processing apparatus, an image processing method, a person identification apparatus, and a method of producing/updating dictionary data in the person identification apparatus.

US 2003/0202685 A1 discloses an ID information forming apparatus to prepare an ID card. An image taking section is configured to take a facial image of a person and to make a first facial image data corresponding to the facial image of the person. The apparatus further comprises an image information forming section to make first image information from the first facial image data, an information acquiring section to acquire second image information regarding a second facial image data corresponding to a past facial image of the person, a checking section to check the first image information against the second image information, an eye-opening degree judging section to judge a degree of eye-opening of the first facial image data, and an ID information forming section.

Document US 2008/212846 A1 relates to inputting a fingerprint image, calculating a quality score from the inputted fingerprint image, storing the fingerprint image having the highest quality score in a registration fingerprint template, storing the fingerprint image having the second quality score in a learning fingerprint template 1, and storing the fingerprint image having the lowest quality score in a learning fingerprint template 2.

### SUMMARY OF THE INVENTION

The present invention has been made to address at least the above problems and/or disadvantages and to provide at least the advantages described below. Accordingly, an aspect of the present invention provides a facial image registration apparatus and method for registering a plurality of facial images at a time to improve a face recognition rate.

According to an aspect of the present invention, a facial image registration apparatus according to independent claim 1 is provided.

According to another aspect of the present invention, a facial image registration method according to independent claim 5 is provided.

Preferred embodiments are defined in the dependent claims.

### BRIEF DESCRIPTION OF THE DRAWINGS

The above and other aspects, features and advantages of the present invention will be more apparent from the following detailed description when taken in conjunction with the accompanying drawings, in which:
FIG. 1 is a block diagram illustrating a facial image registration apparatus, according to an embodiment of the present invention;
FIG. 2 is a flowchart illustrating a process for registering a plurality of target facial images to be used for face recognition and performing face recognition by using the registered target facial images, according to an embodiment of the present invention; and
FIG. 3 is a flowchart illustrating a facial image registration method for registering a plurality of target facial images to be used for face recognition, according to an embodiment of the present invention.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

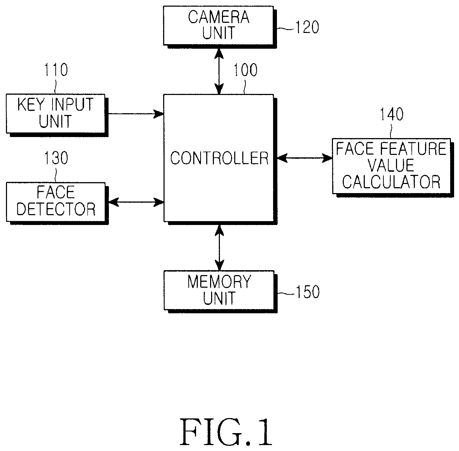

FIG. 1 is a block diagram illustrating a facial image registration apparatus, according to an embodiment of the present invention.

The facial image registration apparatus, according to an embodiment of the present invention, includes a controller 100, a key input unit 110, a camera unit 120, a face detector 130, a face feature value calculator 140, and a memory unit 150.

The controller 100 controls the general operation of the facial image registration apparatus. The controller 100 also stores a plurality of images captured by the camera unit 120 in the memory unit 150 upon input of a key for face registration through the key input unit 110.

The controller 100 then checks if a facial image is detected from a first captured image among the plurality of stored images by the face detector 130. If a facial image has not been detected from the first captured image, the controller 100 may display a message requesting face registration on a screen.

However, if a facial image has been detected from the first captured image, the controller 100 detects a facial image from each of the stored plurality of captured images by using the face detector 130. The controller 100 detects a facial image by performing a face tracking function with the facial image detected from the first captured image to speed up face detection. The face tracking function, which is a sort of motion tracking that tracks motion of an object, allows face detection to be completed faster than face detection using face recognition.

The controller 100 calculates a face feature value for each of a plurality of detected facial images through the face feature value calculator 140. A face feature value is a score applied according to face features in a facial image, such as an image blur degree, eye blink, facial expression, and so on. For example, if scores 0 to 5 are applied according to an eye closed rate, the face feature value calculator 140 applies a score 0 if the eyes are completely closed, a score 3 if the eyes are half closed, and a score 5 if the eyes are completely open.

The controller 100 sorts the plurality of facial images according to the calculated feature point values. The controller 100 may sort the plurality of facial images in an order from a facial image having a large face feature value to a facial image having a small face feature value.

The controller 100 generates a plurality of face feature images having different image features for each of the plurality of sorted facial images. The image features include resolution, exposure, brightness, etc. For example, the controller 100 may generate five face feature images having sizes of 160 pixels x 120 pixels, 320 pixels x 240 pixels, 720 pixels x 480 pixels, 1024 pixels x 680 pixels, and 1280 x 720 pixels, respectively, for the original facial image having a size of 640 pixels x 360 pixels.

If the controller 100 generates face feature images having M sizes for each of N captured images, a total number of generated face feature images is N x M. Herein, N and M are natural numbers.

The controller 100 performs a face recognition algorithm on each of the generated face feature images and calculates a face feature value from each of the face feature images on which the face recognition algorithm is performed to detect a reference facial image having the largest face feature value.

The controller 100 calculates a difference between the face feature value of the detected reference facial image and the face feature value of each of the face feature images, and sorts the face feature images in an order from a face feature image having the smallest difference to a face feature images having the largest difference.

The controller 100 selects K facial images at random from the sorted face feature images to store them as target facial images to be used for face recognition. Herein, K is a natural number.

The key input unit 110 includes an image capturing key for face recognition, and forwards data of a key value corresponding to a key pressed by a user to the controller 100.

The camera unit 120 converts a light signal input by the input of the image capturing key into an image and outputs the image.

The face detector 130 sets the first captured image among the plurality of captured images as a reference image and detects a facial image from the set reference image. The face detector 130 performs the face tracking function by using the detected facial image, thereby detecting a facial image from each of the plurality of captured images.

The face feature value calculator 140 calculates a face feature value for each of the plurality of detected facial images. The face feature value calculator 140 also calculates a face feature value for each of a plurality of facial images having different image features.

The memory unit 150 stores an image captured by the camera unit 120 and stores K images selected at random from a plurality of facial images.

Thus, the present invention can register facial images having various face feature values used for face recognition by user manipulation.

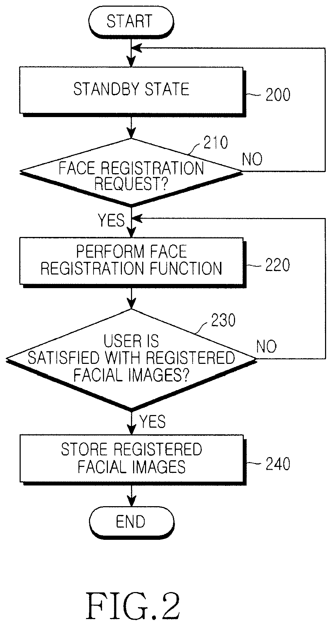

FIG. 2 is a flowchart illustrating a process for registering target facial images to be used for face recognition and performing face recognition by using the registered target facial images, according to an embodiment of the present invention.

Referring to FIG. 2, the controller 100 is in a standby mode in step 200, and determines whether a face registration request is input through the key input unit 110 in step 210. If the face registration request is input, the controller 100 goes to step 220; otherwise, the controller 100 goes back to step 200 to maintain the standby mode.

In step 220, the controller 100 performs a facial image registration operation of detecting a facial image from each of a plurality of original images input from the camera unit 120. Image conversion is performed on the detected facial images according to a plurality of image features, and a random number of facial images is registered, thereby registering target facial images to be used for face recognition.

In step 230, the controller 100 checks if a user is satisfied with the registered target facial images. If the user is satisfied, the controller 100 goes to step 240; otherwise, the controller goes back to step 220 to perform the facial image registration operation again. The controller 100 displays a popup window for checking if the user is satisfied with the registered target facial images on a screen, and if there is an input indicating the user's satisfaction from the key input unit 110, the controller 100 goes to step 240; otherwise, the controller 100 goes back to step 220.

In step 240, the controller 100 stores a plurality of target facial images generated during the facial image registration operation in the memory unit 150, thus completing the facial image registration operation.

In this way, the present invention can improve a face recognition rate by registering a plurality of target facial images through a user's single key input.

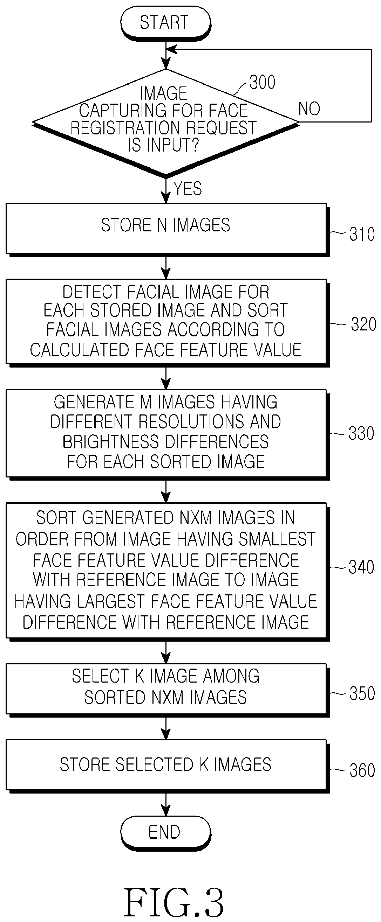

FIG. 3 is a flowchart illustrating a facial image registration method for registering a plurality of target facial images to be used for face recognition, according to an embodiment of the present invention.

In step 300, the controller 100 checks if an image capturing request for facial image registration is input. If the image capturing request is input, the controller 100 goes to step 310; otherwise, the controller 100 checks again if the image capturing request is input in step 300.

In step 310, the controller 100 stores a plurality of captured images input from the camera unit 120 in the memory unit 150. The controller 100 controls the camera unit 120 to capture N images upon the input of the image capturing request for facial image registration.

In step 320, the controller 100 detects a facial image from each of the stored plurality of captured images through the face detector 130, and sorts a plurality of detected facial images according to a face feature value calculated for each of the detected facial images by the face feature value calculator 140. The face feature value is a score applied according to face features, such as an image blur degree, eye blink, facial expression, and so on, and may be arbitrarily set by the user or may be preset in an apparatus.

In step 330, the controller 100 generates face feature images having different resolutions and different brightness differences for each of the plurality of sorted facial images. For example, the controller 100 may generate N x M x P face feature images having P different brightness differences for N facial images having M different resolutions. Herein, P is a natural number.

In step 340, the controller 100 calculates a face feature value for each of the plurality of generated face feature images through the face feature value calculator 140, and sorts the plurality of generated face feature images in an order from a face feature image having the smallest face feature value difference with a reference facial image to a face feature image having the largest face feature value difference with the reference facial image. A face feature image having the largest face feature value and the highest resolution may be set as the reference facial image, or may be set arbitrarily by the user.

In step 350, the controller 100 selects K target facial images to be used for face recognition among the plurality of sorted face feature images. Herein, K is a natural number, and may be set arbitrarily by the user or may be preset by default.

In step 360, the controller 100 stores the selected K target facial images in the memory unit 150 to register a plurality of user's facial images, thus completing the facial image registration operation.

As is apparent from the foregoing description, by registering a plurality of various facial images at a user's single request during a face registration process necessary for face recognition, the user can conveniently register a plurality of facial images at a time and a face recognition rate can be improved by using the plurality of registered facial images during face recognition.

While the invention has been shown and described with reference to certain embodiments thereof, it will be understood by those skilled in the art that various changes in form and detail may be made therein without departing from the scope of the invention as defined by the appended claims.

## Claims

1. An apparatus for registering a plurality of facial images for face recognition, the apparatus comprising:
a camera (120);
a face detector (130);
a face feature value calculator (140); and
a controller (100) configured to:
control the camera (120) to capture a plurality of images of a subject,
control the face detector (130) to detect a plurality of first facial images from the plurality of captured images,
control the face feature value calculator (140) to calculate face feature value for each of the plurality of first facial images, wherein the face feature value is a score that is applied according to face features of each of a plurality of facial images,
sort the plurality of first facial images based on the calculated face feature value, **characterised by** the controller (100) being further configured to: generate a plurality of second facial images having different image features by changing an image feature of each of the plurality of sorted first facial images, wherein the image feature includes at least one of resolution, exposure and brightness,
control the face feature value calculator (140) to calculate face feature values for the plurality of second facial images,
sort the plurality of second facial images based on difference between a face feature value of a reference image among the plurality of second facial images and each of the calculated face feature values for the plurality of second facial images, and
register a plurality of third facial images selected among the plurality of sorted second facial images as target facial images to be used for face recognition of the subject.

2. The apparatus of claim 1, wherein the controller (100) is further configured to sort the plurality of first facial images in an order from a facial image having a highest score to a facial image having a lowest score.

3. The apparatus of claim 1, wherein the controller (100) is further configured to select a predetermined number of facial images from the plurality of sorted second facial images.

4. The apparatus of claim 3, wherein the score further represents at least one of an image blur degree and types of a facial expression.

5. A method for registering a plurality of facial images to be used for face recognition, the method comprising the steps of:
capturing a plurality of images of a subject;
detecting a plurality of first facial images from the plurality of captured images;
calculating face feature value for each of the plurality of first facial images, wherein the face feature value is a score that is applied according to face features of each of a plurality of facial images;
sorting the plurality of first facial images based on the calculated face feature values; **characterised by**: generating a plurality of second facial images having different image features by changing an image feature of each of the plurality of sorted first facial images, wherein the image feature includes at least one of resolution, exposure and brightness;
calculating face feature values for the plurality of second facial images;
sorting the plurality of second facial images based on difference between a face feature value of a reference image among the plurality of second facial images and each of the calculated face feature values for the plurality of second facial images; and
registering a plurality of third facial images selected among the plurality of sorted second facial images as target facial images to be used for face recognition of the subject.

6. The method of claim 5, wherein sorting the plurality of first facial images comprises:
sorting the plurality of first facial images in an order from a facial image having a highest score to a facial image having a lowest score.

7. The method of claim 5, further comprising:
selecting a predetermined number of facial images from the plurality of sorted second facial images.

8. The method of claim 5, wherein the score further represents at least one of an image blur degree and types of a facial expression.

## Patentansprüche

1. Vorrichtung zur Registrierung mehrerer Gesichtsbilder zur Gesichtserkennung, wobei die Vorrichtung umfasst:
eine Kamera (120);
einen Gesichtsdetektor (130);
eine Gesichtseigenschaftwert-Berechnungseinheit (140); und
eine Steuerung (100), die ausgebildet ist zum:
Steuern der Kamera (120) derart, dass sie mehrerer Bilder eines Objekts aufnimmt,
Steuern des Gesichtsdetektors (130) derart, dass es mehrere erste Gesichtsbilder aus den mehreren aufgenommenen Bildern erfasst,
Steuern der Gesichtseigenschaftswert-Berechnungseinheit (140) derart, dass sie einen Gesichtseigenschaftswert für jedes der mehreren ersten Gesichtsbilder berechnet, wobei der Gesichtseigenschaftswert eine Bewertung ist, die entsprechend zu Gesichtseigenschaften jedes der mehreren Gesichtsbilder angewendet wird,
Sortieren der mehreren ersten Gesichtsbilder auf der Grundlage des berechneten Gesichtseigenschaftswertes,
**dadurch gekennzeichnet, dass** die Steuerung (100) ferner ausgebildet ist zum:
Erzeugen mehrerer zweiter Gesichtsbilder mit unterschiedlichen Bildeigenschaften durch Änderung einer Bildeigenschaft jedes der mehreren sortierten ersten Gesichtsbilder, wobei die Bildeigenschaft eine Auflösung und/oder eine Belichtung und/oder eine Helligkeit umfasst,
Steuern der Gesichtseigenschaftswert-Berechnungseinheit (140) derart, dass die Gesichtseigenschaftswerte für die mehreren zweiten Gesichtsbilder berechnet,
Sortieren der mehreren zweiten Gesichtsbilder auf der Grundlage einer Differenz zwischen einem Gesichtseigenschaftswert eines Referenzbildes aus den mehreren zweiten Gesichtsbildern und jedem der berechneten Gesichtseigenschaftswerten für die mehreren zweiten Gesichtsbilder, und
Registrieren mehrerer dritter Gesichtsbilder, die aus den mehreren sortierten zweiten Gesichtsbildern ausgewählt sind, als Ziel-Gesichtsbilder, die zur Gesichtserkennung des Objekts zu verwenden sind.

2. Vorrichtung nach Anspruch 1, wobei die Steuerung (100) ferner ausgebildet ist, die mehreren ersten Gesichtsbilder in einer Reihenfolge ausgehend von einem Gesichtsbild mit einer höchsten Bewertung bis zu einem Gesichtsbild mit einer niedrigsten Bewertung zu sortieren.

3. Vorrichtung nach Anspruch 1, wobei die Steuerung (100) ferner ausgebildet ist, eine vorbestimmte Anzahl an Gesichtsbildern aus den mehreren sortierten zweiten Gesichtsbildern auszuwählen.

4. Vorrichtung nach Anspruch 3, wobei die Bewertung ferner einen Bildverschmierungsgrad und/oder Arten eines Gesichtsausdrucks repräsentiert.

5. Verfahren zur Registrierung mehrerer Gesichtsbilder, die zur Gesichtserkennung zu verwenden sind, wobei das Verfahren die Schritte umfasst:
Aufnehmen mehrerer Bilder eines Objekts;
Erfassen mehrerer erster Gesichtsbilder aus den mehreren aufgenommenen Bildern;
Berechnen eines Gesichtseigenschaftswertes für jedes der mehreren ersten Gesichtsbilder, wobei der Gesichtseigenschaftwert eine Bewertung ist, die entsprechend zu Gesichtseigenschaften jedes von mehreren Gesichtsbildern angewendet wird;
Sortieren der mehreren ersten Gesichtsbilder auf der Grundlage der berechneten Gesichtseigenschaftswerte;
**gekennzeichnet durch**:
Erzeugen mehrerer zweiter Gesichtsbilder mit unterschiedlichen Bildeigenschaften durch Änderung einer Bildeigenschaft jedes der mehreren sortierten ersten Gesichtsbilder, wobei die Bildeigenschaft eine Auflösung und/oder eine Belichtung und/oder eine Helligkeit umfasst;
Berechnen von Gesichtseigenschaftswerten für die mehreren zweiten Gesichtsbilder;
Sortieren der mehreren zweiten Gesichtsbilder auf der Grundlage einer Differenz zwischen einem Gesichtseigenschaftswert eines Referenzbildes aus den mehreren zweiten Gesichtsbildern und jedem berechneten Gesichtseigenschaftswert für die mehreren zweiten Gesichtsbilder; und
Registrieren mehrerer dritter Gesichtsbilder, die aus den mehreren sortierten zweiten Gesichtsbildern ausgewählt werden, als Ziel-Gesichtsbilder, die zur Gesichtserkennung des Objekts zu verwenden sind.

6. Verfahren nach Anspruch 5, wobei Sortieren der mehreren ersten Gesichtsbilder umfasst:
Sortieren der mehreren ersten Gesichtsbilder in einer Reihenfolge von einem Gesichtsbild mit einer höchsten Bewertung zu einem Gesichtsbild mit einer niedrigsten Bewertung.

7. Verfahren nach Anspruch 5, das ferner umfasst:
Auswählen einer vorbestimmten Anzahl an Gesichtsbildern aus den mehreren sortierten zweiten Gesichtsbildern.

8. Verfahren nach Anspruch 5, wobei die Bewertung ferner einen Bildverschmierungsgrad und/oder Arten eines Gesichtsausdrucks repräsentiert.

## Revendications

1. Appareil d'enregistrement d'une pluralité d'images faciales pour reconnaissance faciale, l'appareil comprenant:
une caméra (120);
un détecteur facial (130);
un calculateur de valeur de caractéristique faciale (140); et
un contrôleur (100) configuré pour:
commander à la caméra (120) de capturer une pluralité d'images d'un sujet,
commander au détecteur facial (130) de détecter un pluralité de premières images faciales à partir de la pluralité d'images capturées,
commander au calculateur de valeur de caractéristique faciale (140) de calculer une valeur de caractéristique faciale pour chacune de la pluralité de premières images faciales, dans lequel la valeur de caractéristique faciale est une note qui est appliquée en fonction des caractéristiques faciales de chacune d'une pluralité d'images faciales,
trier la pluralité de premières images faciales sur la base de la valeur de caractéristique faciale calculée, **caractérisé en ce que** le contrôleur (100) est en outre configuré pour:
générer une pluralité de deuxièmes images faciales aux caractéristiques d'image différentes en modifiant une caractéristique d'image de chacune de la pluralité de premières images faciales triées, dans lequel la caractéristique d'image comprend au moins un élément parmi la définition, l'exposition et la luminosité,
commander au calculateur de valeur de caractéristique faciale (140) de calculer des valeurs de caractéristique faciale pour la pluralité de deuxièmes images faciales,
trier la pluralité de deuxièmes images faciales en fonction de la différence entre une valeur de caractéristique faciale d'une image de référence parmi la pluralité de deuxièmes images faciales et chacune des valeurs de caractéristique faciale calculées pour la pluralité de deuxièmes images faciales, et
enregistrer une pluralité de troisièmes images faciales sélectionnées parmi la pluralité de deuxièmes images faciales triées comme images faciales cibles à utiliser pour la reconnaissance faciale du sujet.

2. Appareil selon la revendication 1, dans lequel le contrôleur (100) est en outre configuré pour trier la pluralité de premières images faciales dans l'ordre suivant : de l'image faciale présentant la note la plus élevée à l'image faciale présentant la note la plus basse.

3. Appareil selon la revendication 1, dans lequel le contrôleur (100) est configuré en outre pour sélectionner un nombre prédéterminé d'images faciales à partir de la pluralité de deuxièmes images faciales triées.

4. Appareil selon la revendication 3, dans lequel la note exprime en outre un élément parmi un degré de flou d'image et des types d'expression faciale.

5. Procédé d'enregistrement d'une pluralité d'images faciales à utiliser pour la reconnaissance faciale, le procédé comprenant les étapes consistant à:
capturer une pluralité d'images d'un sujet;
détecter un pluralité de premières images faciales à partir de la pluralité d'images capturées;
calculer une valeur de caractéristique faciale pour chacune de la pluralité de premières images faciales, dans lequel la valeur de caractéristique faciale est une note qui est appliquée en fonction des caractéristiques faciales de chacune d'une pluralité d'images faciales,
trier la pluralité de premières images faciales sur la base des valeurs de caractéristique faciale calculées;
**caractérisé par**:
la génération d'une pluralité de deuxièmes images faciales aux caractéristiques d'image différentes en modifiant une caractéristique d'image de chacune de la pluralité de premières images faciales triées, dans lequel la caractéristique d'image comprend au moins un élément parmi la définition, l'exposition et la luminosité;
le calcul de valeurs de caractéristique faciale pour la pluralité de deuxièmes images faciales;
le tri de la pluralité de deuxièmes images faciales en fonction de la différence entre une valeur de caractéristique faciale d'une image de référence parmi la pluralité de deuxièmes images faciales et chacune des valeurs de caractéristique faciale calculées pour la pluralité de deuxièmes images faciales; et
l'enregistrement d'une pluralité de troisièmes images faciales sélectionnées parmi la pluralité de deuxièmes images faciales triées comme images faciales cibles à utiliser pour la reconnaissance faciale du sujet.

6. Procédé selon la revendication 5, dans lequel le tri de la pluralité de premières images faciales consiste à:
trier la pluralité de premières images faciales dans l'ordre suivant : de l'image faciale présentant la note la plus élevée à l'image faciale présentant la note la plus basse.

7. Procédé selon la revendication 5, consistant en outre à:
sélectionner un nombre prédéterminé d'images faciales à partir de la pluralité de deuxièmes images faciales triées.

8. Procédé selon la revendication 5, dans lequel la note exprime en outre un élément parmi un degré de flou d'image et des types d'expression faciale.
